# EUROPÄISCHE PATENTANMELDUNG

(11) **EP 1 502 556 A2**
(43) Veröffentlichungstag der Anmeldung: **02.02.2005**
(21) Anmeldenummer: 04017926.9
(22) Anmeldetag: 29.07.2004
(51) Int. Cl.: A61C 1/08, A61C 8/00

(54) **Anordnung zur Führung eines Dentalimplantatbohrers, Bohrschablone sowie Bohrschablonenaufnahmeimplantat für die Anordnung und Verfahren zur Herstsellung dieser Bohrschablone**

(30) Priorität: 01.08.2003 DE 10335272
(71) Anmelder: BEGO Semados GmbH, 28359 Bremen (DE)
(72) Erfinder: Gross, Michael, Dr., 28357 Bremen (DE)
(74) Vertreter: Eisenführ, Speiser & Partner

(57) **Zusammenfassung**

Die Erfindung betrifft eine Anordnung zur Führung eines Dentalimplantatbohrers zum Herstellen einer Bohrung 11, 20-22 in einem Kiefer 1 zur Aufnahme eines Dentalimplantats. Die Anordnung umfasst eine an einem Kiefer, Gaumen und/oder einen oder mehrere Zähne angepasste Bohrschablone 4 mit einem oder mehrere Löchern 6 zur Durchführung des Bohrers. Die Anordnung umfasst ferner wenigstens ein Bohrschablonenaufnahmeimplantat 2 zur Aufnahme der Bohrschablone 4 im Kiefer 1. Die Bohrschablone 4 weist wenigstens eine erste Befestigungseinrichtung 7, 8 und das Bohrschablonenaufnahmeimplantat 2 eine zweite Befestigungseinrichtung 28, 29 auf, wobei diese Befestigungseinrichtungen derart aneinander angepasst sind, um die Bohrschablone 4 an dem Bohrschablonenaufnahmeimplantat 2 zu befestigen. Die Erfindung betrifft auch ein Verfahren zum-Herstellen einer derartigen Bohrschablone.

## Beschreibung

Die Erfindung betrifft eine Anordnung zur Führung eines Dentalimplantatbohrers zum Herstellen einer Bohrung in einem Kiefer zur Aufnahme eines Dentalimplantats, wobei die Anordnung eine an einen Kiefer, Gaumen und/oder einen oder mehrere Zähne angepasste Bohrschablone mit einem oder mehreren Löchern zur Durchführung des Bohrers umfasst.

Die Erfindung betrifft ferner eine Bohrschablone und ein Bohrschablonenaufnahmeimplantat für eine derartige Anordnung.

Schließlich betrifft die Erfindung auch ein Verfahren zum Herstellen einer derartigen Bohrschablone.

Bekannt sind Bohrschablonen zum Führen von Dentalimplantatbohrern während der Herstellung einer Bohrung im Kiefer, welche zur Aufnahme eines Dentalimplantats dienen soll, die auf verbliebenen Zähnen oder dem Gaumen aufgesetzt werden. Derartige Bohrschablonen werden üblicherweise im wesentlichen manuell modelliert. Hierzu wird zunächst ein Abdruck des Gebisses bzw. des Gaumens genommen, um sodann ein Modell des Gebisses bzw. des Gaumens zu erzeugen. Auf dieses Modell wird dann ein Wachsmodell für eine nachfolgend herzustellende Bohrschablone aufmodelliert. Dieses Modell stützt sich auf verbliebenen Zähnen - soweit vorhanden - oder nur am Gaumen ab.

In einem weiteren Schritt wird dieses Modell aus Kunststoff nachgebildet. Dieses Kunststoffmodell weist Löcher auf, die zur Führung eines Dentalimplantatbohrers während eines operativen Eingriffs dienen. Während eines operativen Eingriffs wird durch ein derartiges Loch ein Dentalimplantatbohrer durchgeführt, der eine Bohrung im Kiefer zur späteren Aufnahme eines Dentalimplantats vornimmt. Die Bohrschablone soll dazu dienen, eine möglichst präzise Bohrung vornehmen zu können.

Dieser bekannte Prozess hät jedoch den Nachteil, dass die Bohrschablonen regelmäßig unzureichend im Mund des Patienten fixiert werden können. Daher ist eine Verschiebung oder Verschwenkung der Bohrschablone ein häufig auftretender Nachteil mit der Folge, dass die im Kiefer vorzunehmenden Bohrungen nicht ihrer Solllage bzw. Sollausrichtung entsprechen.

Darüber hinaus erfordert diese bekannte Vorgehensweise eine Reihe von manuellen Maßnahmen, insbesondere während der Herstellung der Bohrschablone. Diese manuellen Maßnahmen sind fehleranfällig und reduzieren daher ebenfalls die Qualität der vorzunehmenden Bohrungen zur Aufnahme von Dentalimplantaten.

Der Erfindung liegt daher das Problem zugrunde, das Herstellen von Bohrungen zur Aufnahme von Dentalimplantaten zu verbessern.

Die Erfindung löst dieses Problem mit einer Anordnung der eingangs genannten Art, die dadurch gekennzeichnet ist, dass die Anordnung ferner wenigstens ein Bohrschablonenaufnahmeimplantat zur Aufnahme der Bohrschablone im Kiefer umfasst und die Bohrschablone wenigstens eine erste Befestigungseinrichtung und das Bohrschablonenimplantat eine zweite Befestigungseinrichtung aufweist, wobei die erste Befestigungseinrichtung und die zweite Befestigungseinrichtung derart aneinander angepasst sind, dass die Bohrschablone an dem Bohrschablonenaufnahmeimplantat befestigbar ist.

Die Erfindung löst dieses Problem ferner durch eine Bohrschablone für eine derartige Anordnung, wobei die Bohrschablone ein oder mehrere Löcher zur Durchführung eines Dentalimplantatbohrers zum Herstellen einer Bohrung in einem Kiefer zur Aufnahme des Dentalimplantats und wenigstens eine erste Befestigungseinrichtung aufweist, die derart ausgebildet ist, dass sie mit einer zweiten Befestigungseinrichtung eines Bohrschablonenaufnahmeimplantats zur Aufnahme der Bohrschablone im Kiefer in Eingriff zur Befestigung der Bohrschablone an dem Bohrschablonenaufnahmeimplantat verbindbar ist.

Die Erfindung löst dieses Problem ferner mit einem Bohrschablonenaufnahmeimplantat für eine derartige Anordnung, wobei das Bohrschablonenaufnahmeimplantat zur Aufnahme einer derartigen Bohrschablone ausgebildet ist, die wenigstens eine erste Befestigungseinrichtung aufweist, und wobei das Bohrschablonenaufnahmeimplantat eine zweite Befestigungseinrichtung aufweist, die derart an die erste Befestigungseinrichtung angepasst ist, dass die Bohrschablone an dem Bohrschablonenaufnahmeimplantat befestigbar ist.

Die Erfindung erlaubt mit diesen Maßnahmen zunächst ein oder mehrere Bohrschablonenaufnahmeimplantate im Kiefer zu verschrauben. An dieses bzw. diese Bohrschablonenaufnahmeimplantate wird sodann eine speziell angepasste Bohrschablone montiert. Diese Bohrschablone ist insbesondere mit Befestigungseinrichtungen versehen, die an die Position des bzw. der gesetzten Schablonenaufnahmeimplantate angepasste sind. Auf diese Weise ist die Bohrschablone im Kiefer fest fixierbar. Ein Verrutschen, Verschieben oder Verdrehen der Bohrschablone kann somit im wesentlichen vollständig vermieden werden.

Bevorzugt werden drei Bohrschablonenaufnahmeimplantate im Kiefer implantiert. Auf diese Weise lässt sich die Bohrschablone an drei Punkten fixieren. Durch eine derartige Drei-Punkt-Fixierung kann jedwede Lageveränderung der Bohrschablone im Kiefer, insbesondere während der Herstellung von Bohrungen im Kieferknochen vermieden werden. Idealerweise liegen drei derartige Bohrschablonenaufnahmeimplantate nicht in einer Gerade, sondern derart, dass das dritte der Bohrschablonenaufnahmeimplantate außerhalb der durch zwei andere Bohrschablonenaufnahmeimplantate verlaufenden Geraden angeordnet ist.

Die Befestigungseinrichtungen an der Bohrschablone sind an die Positionen der Bohrschablonenaufnahmeimplantate im Kiefer derart angepasst, dass sie mit korrespondierenden Befestigungseinrichtungen an den Bohrschablonenaufnahmeimplantaten befestigbar sind.

Bevorzugt sind in der Bohrschablone ein oder mehrere entnehmbare Führungshülsen in-den Löchern zur Durchführung eines Dentalimplantatbohrers vorgesehen, um auch eine exakte Führung von Bohrern mit unterschiedlichen Bohrerdurchmessern zu ermöglichen. Besonders bevorzugt sind mehrere derartiger Führungshülsen teleskopartig ineinander gesteckt und einzeln entnehmbar. Auf diese Weise kann zu Beginn eines operativen Eingriffs zum Setzen von Löchern für Dentalimplantate mit einem dünnen Bohrer begonnen werden. Sobald eine erste dünne Bohrung vorgenommen wurde, wird die innerste Führungshülse entnommen. Es verbleibt ein zylindrisches Loch mit einem größeren Durchmesser, das zur Führung eines Dentalimplantatbohrers mit größeren Durchmesser geeignet ist. Auf dieses Weise lässt sich eine Reihe von Dentalimplantatbohrern mit unterschiedlichem Durchmesser an einer vorbestimmten Position verwenden.

Das Bohrschablonenaufnahmeimplantat weist bevorzugt in einem oberen, dem Implantatkopf zugewandten Abschnitt einen konisch verlaufenden Abschnitt auf, der einen zum Kopf des Bohrschablonenaufnahmeimplantats hin zunehmenden Durchmesser hat. Dieser zunehmende Durchmesser ermöglicht auf vorteilhafte Weise eine verbesserte Abdichtung des sich beim Einbringen des Bohrschablonenaufnahmeimplantats ergebenden Spaltes zum umgebenden Zahnfleisch hin. Je tiefer das Bohrschablonenaufnahmeimplantat in den Kieferknochen eingeschraubt wird, desto breiter wird der Abschnitt des Bohrschablonenaufnahmeimplantats, der mit dem Zahnfleisch im Kontakt steht. Auf diese Weise kann ein Eindringen von Speiseresten und Bakterien im Bereich des Bohrschablonenaufnahmeimplantats verhindert werden.

Die Erfindung löst das o.g. Problem ferner durch ein Verfahren zur Herstellung einer derartigen Bohrschablone, bei dem die Bohrschablone durch schichtweises Lasersintern oder Laserschmelzen von im Pulverform vorliegendem Material gebildet wird.

Durch dieses Herstellungsverfahren lässt sich eine weitgehende Automatisierung erzielen, da der dabei verwendete Laser computergestützt vorgegebene Formen erzeugen kann. Manuelle Vorgänge bei der Herstellung der Bohrschablone können weitgehend reduziert werden. Die Form einer Bohrschablone wird zunächst rechnergestützt ermittelt. Dazu werden bei der Abtastung eines Patientengebisses bzw. eines Abdrucks des Patientengebisses ermittelte Daten zugrundegelegt, um die optimale Form der Bohrschablone zu erhalten. Das Verfahren des Lasersinterns bzw. Laserschmelzens ist auch deshalb besonders vorteilhaft, da sich mit diesem Verfahren komplexe Strukturen nahezu beliebiger Form erzeugen lassen.

Manuelle Eingriffe werden somit kaum noch benötigt. Daher erlaubt dieses Herstellungsverfahren eine kostengünstige und hoch präzise Herstellung von Bohrschablonen und ermöglicht somit eine verbesserte Herstellung von Bohrungen für Dentalimplantate.

Bevorzugt werden zunächst Positionen von im Kiefer implantierten Bohrschablonenaufnahmeimplantaten mittels Computertomographie ermittelt. Sodann werden an diesen Positionen entsprechenden Positionen an der Bohrschablone die ersten Befestigungseinrichtungen ausgebildet. Auf diese Weise erfolgt vorteilhaft eine präzise Anpassung der Befestigungseinrichtungen der Bohrschablone an die Befestigungseinrichtungen der Bohrschablonenaufnahmeimplantate und zwar ebenfalls ohne dass hierzu fehleranfällige manuelle Eingriffe erforderlich wären.

Weitere vorteilhafte Ausführungsformen der Erfindung ergeben sich aus den Unteransprüchen sowie aus den anhand der beigefügten Zeichnung näher erläuterten Ausführungsbeispiele. In der Zeichnung zeigt:
- Fig. 1: eine schematische Ansicht eines Unterkiefers mit implantierten Bohrschablonenaufnahmeimplantaten gemäß einem Ausführungsbeispiel der Erfindung;
- Fig. 2: eine an den Bohrschablonenaufnahmeimplantaten gemäß Fig. 1 montierte Bohrschablone gemäß einem Ausführungsbeispiel der Erfindung;
- Fig. 3: die Bohrschablone gemäß Fig. 2 mit schematisch angedeuteten Bohrungen im Kiefer zur Aufnahme von Dentalimplantaten;
- Fig. 4: schematische Schnittansichten eines im Kiefer implantierten Bohrschablonenaufnahmeimplantats mit daran befestigter Bohrschablone sowie diese Bohrschablone im Bereich der Löcher zur Durchführung eines Dentalimplantatbohrers mit mehrere ineinandergesteckten Führungshülsen nebst schematisch angedeuteten Bohrungen im Kiefer; und
- Fig. 5: eine schematische Ansicht einer Vorrichtung zur Herstellung einer Bohrschablone gemäß der Erfindung.

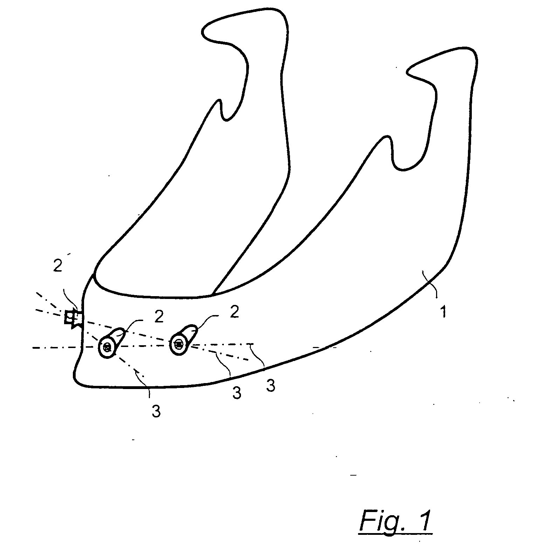

Fig. 1 zeigt einen Unterkieferknochen 1, in dessen vorderem Bereich drei Bohrschablonenaufnahmeimplantate 2 implantiert, nämlich eingeschraubt sind. Diese Bohrschablonenaufnahmeimplantate 2 sind derart angeordnet, dass jeweils ein Bohrschablonenaufnahmeimplantat 2 außerhalb einer durch zwei andere Bohrschablonenaufnahmeimplantate 2 verlaufenden Gerade 3 positioniert ist.

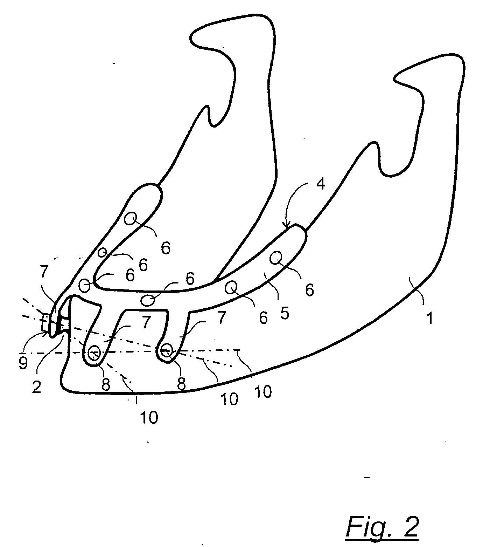

Fig. 2 zeigt eine an diesen Bohrschablonenaufnahmeimplantaten 2 montierte Bohrschablone 4. Die Bohrschablone 4 weist einen Hauptkörper 5 mit durch die Bohrschablone 4 hindurchtretenden Löchern 6. Diese Löcher 6 dienen zur Durchführung eines Dentalimplantatbohrers, um Bohrungen im Kieferknochen für die spätere Aufnahme eines Dentalimplantats (nicht dargestellt) herzustellen.

An diesem Hauptkörper 5 sind Befestigungszungen 7 angeordnet, die als Befestigungseinrichtungen der Bohrschablone 4 an den Bohrschablonenaufnahmeimplantaten 2 dienen. Jeder der Befestigungszungen 7 weist ein durchgehendes Loch 8 zur Aufnahme eines Kopfes 9 eines Bohrschablonenaufnahmeimplantats 2 auf.

Diese Löcher 8 in den Befestigungszungen 7 sind derart angebracht, dass jeweils ein Loch 8 außerhalb einer durch die anderen beiden Löcher 8 verlaufenden Geraden 10 angeordnet ist.

Durch die Anordnung der Bohrschablonenaufnahmeimplantate 2 im Kiefer 1 sowie die daran angepasste Anordnung der Löcher 8 in den Befestigungszungen 7 der Bohrschablone 4 ist es gewährleistet, dass drei Befestigungspunkte für die Bohrschablone nicht in einer Geraden liegen, was ein Verschwenken der Bohrschablone 4 unter Umständen nicht vollständig verhindern könnte. Vielmehr sind sowohl die Bohrschablonenaufnahmeimplantate 2 als auch die korrespondierenden Befestigungseinrichtungen, nämlich Löcher 8, an der Bohrschablone 4 derart angeordnet, dass sie eine Ebene aufspannen. Dies ermöglicht eine Fixierung der Bohrschablone 4 im Raum.

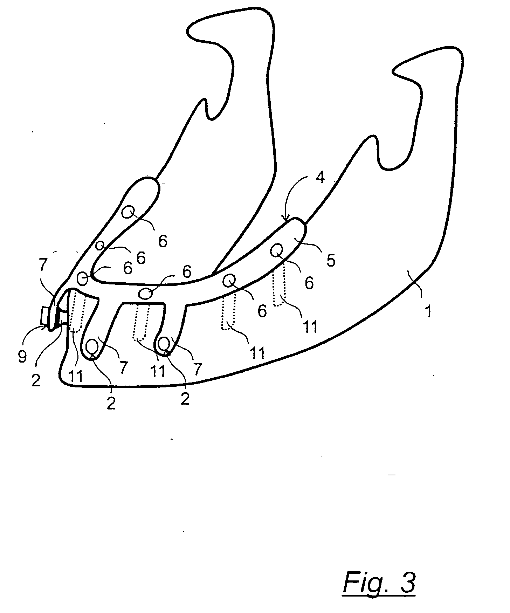

Fig. 3 zeigt die an den Bohrschablonenaufnahmeimplantaten 2 montierte Bohrschablone 4, nachdem durch die Löcher 6 Bohrungen 11 in den Kiefer 1 gebohrt worden sind. Die Löcher 6 dienen dabei zur exakten Führung eines Dentalimplantatbohrers zum Herstellen der Bohrungen 11 im Kiefer 1.

Die Fig. 1 bis 3 zeigen, dass die Bohrschablonenaufnahmeimplantate 2 vorzugsweise seitlich am Kiefer angebracht werden, während die Bohrungen 11 im Kiefer 1 von oben bzw. unten vorgenommen werden. Die Bohrungen 11 stehen somit mehr oder weniger, d.h. im wesentlichen senkrecht zu den Bohrschablonenaufnahmeimplantaten 2. Diese Anordnung der Bohrschablonenaufnahmeimplantate 2 ist zwar in vielen Fällen bereits dadurch bedingt, dass im Bereich des Hauptkörpers 5 noch Zähne vorhanden sind, die eine Implantierung von Bohrschablonenaufnahmeimplantaten 2 verhindern. Jedoch ist diese Art der Anbringung der Bohrschablonenaufnahmeimplantate 2 auch in den Fällen vorteilhaft, in denen im wesentlichen alle Zähne eines Kiefers fehlen, da auf diese Weise der Bereich für das Setzen der Bohrungen 11 zur Aufnahme der Dentalimplantate frei von den Bohrschablonenaufnahmeimplantaten 2 gehalten werden kann. Ferner ermöglicht diese Anordnung der Bohrschablonenaufnahmeimplantate 2 eine zusätzliche Steifigkeit der Bohrschablone 4 und somit eine besonders starre Fixierung der Bohrschablone 4.

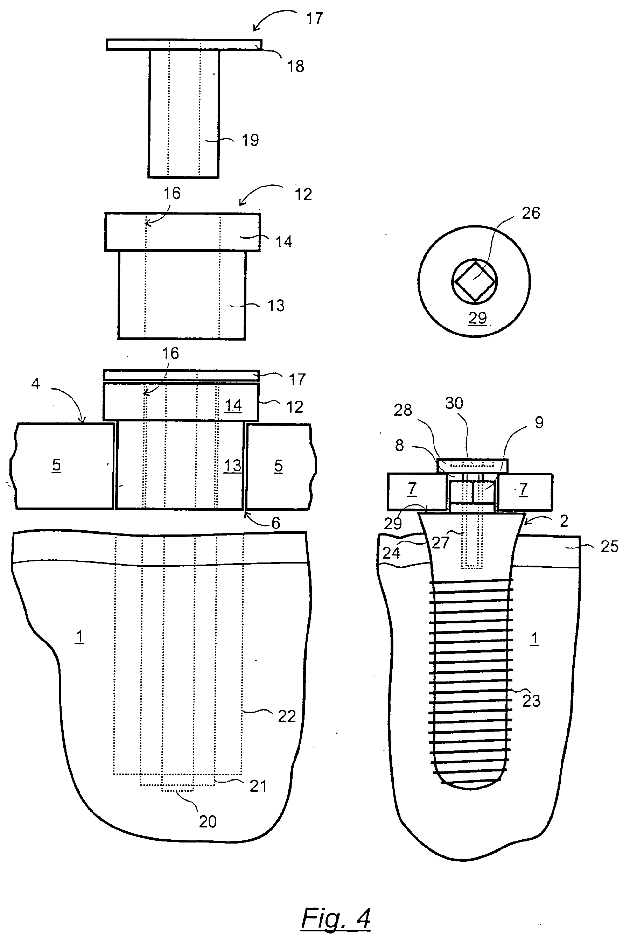

Fig. 4 zeigt auf der linken Seite den Hauptkörper 5 der Bohrschablone 4 mit einem Loch 6 zur Durchführung eines Dentalimplantatbohrers, in das eine erste Führungshülse 12 eingesteckt ist. Diese Führungshülse 12 weist einen unteren zylindrischen Abschnitt 13 sowie einen oberen (bspw. zylindrischen) Abschnitt 14 auf. Der Außendurchmesser des oberen Abschnitts 14 ist größer als der Außendurchmesser des unteren zylindrischen Abschnitts 13. Der Außendurchmesser des unteren zylindrischen Abschnitts 13 entspricht im wesentlichen dem Innendurchmesser des Loches 6. Der obere Abschnitt 14 stützt sich mit seinem Rand 15 auf dem Hauptkörper 5 der Bohrschablone 4 ab.

Diese erste Führungshülse 12 weist im Inneren eine zylindrische Durchführung 16 auf. Der Durchmesser dieser zylindrischen Durchführung 16 ist an einen Dentalimplantatbohrer mit einem entsprechenden Durchmesser angepasst.

Diese zylindrische Durchführung 16 dient ferner zur Aufnahme einer zweiten Führungshülse 17, die ebenfalls einen oberen (bspw. zylindrischen) Abschnitt 18 und einen unteren zylindrischen Abschnitt 19 aufweist. Der Außendurchmesser des unteren zylindrischen Abschnitts 19 entspricht im wesentlichen dem Innendurchmesser der zylindrischen Durchführung 16 der ersten Führungshülse 12, so dass die zweite Führungshülse 17 spielfrei von der ersten Führungshülse 12 aufgenommen werden kann.

Der obere Abschnitt 18 der zweiten Führungshülse 17 weist einen Außendurchmesser auf, der größer ist als der Innendurchmesser der zylindrischen Durchführung 16, so dass dieser Abschnitt als Anschlag der zweiten Führungshülse 17 an dem oberen Rand der oberen Führungshülse 12 dient.

Die Führungshülsen 12 und 17 werden zunächst in das Loch 6 eingesteckt. Auf diese Weise ist das Loch 6 mit einer Hülse mit kleinstem Durchmesser versehen. Nun kann der Operateur mit einem ersten dünnen Dentalimplantatbohrer eine erste Bohrung 20 im Unterkieferknochen 1 vornehmen. Sodann entnimmt der Operateur die zweite Führungshülse 17 und führt einen zweiten, dickeren Dentalimplantatbohrer in die zylindrische Durchführung 16 der ersten Führungshülse 12 und nimmt eine zweite Bohrung 21 mit breiterem Durchmesser als der der ersten Bohrung 20 im Unterkieferknochen 1 vor.

Anschließend entnimmt der Operateur die erste Führungshülse 12 und vollführt mit einem dritten, gegenüber dem zweiten Dentalimplantatbohrer dickeren Bohrer eine dritte Bohrung 22 im Unterkieferknochen 1. Auf diese Weise entstehen die in Fig. 3 dargestellten Bohrungen 11.

Die Führungshülsen 12 und 17 dienen somit nicht nur der Führung eines Dentalimplantatbohrers, sondern auch als Anschlag für den jeweiligen Dentalimplantatbohrer, so dass dieser jeweils nur bis zu einer vorbestimmten Tiefe in den Kieferknochen 1 bohren kann.

Zwar sind in dem in Fig. 4 dargestellten Ausführungsbeispiel lediglich zwei Führungshülsen 12, 17 vorgesehen. Bei alternativen Ausführungsbeispielen können jedoch auch mehr oder weniger Führungshülsen vorgesehen sein.

Bei einem weiteren, nicht dargestellten Ausführungsbeispiel sind die Führungshülsen nicht ineinandersteckbar, sondern weisen gleichen Außendurchmesser im jeweils unteren zylindrischen Abschnitt auf, jedoch bei unterschiedlichen Innendurchmessern der zylindrischen Durchführungen. Bei einer derartigen Konfiguration der Führungshülsen wird für jeden Dentalimplantatbohrer jeweils nur eine Führungshülse in das Loch 6 im Hauptkörper 5 der Bohrschablone 4 eingesteckt und nach Vornahme der entsprechenden Bohrung gegen eine andere Führungshülse ausgetauscht.

Auf der rechten Hälfte von Fig. 4 ist ein Bohrschablonenaufnahmeimplantat 2 dargestellt, das im Unterkieferknochen 1 eingebracht ist. Das Bohrschablonenaufnahmeimplantat 2 weist einen unteren Abschnitt mit einem, insbesondere selbstschneidenden, Außengewinde 23. Oberhalb dieses Gewindes 23 weist das Bohrschablonenaufnahmeimplantat 2 einen konischen Abschnitt 24 auf, dessen Durchmesser zum Kopf 9 des Bohrschablonenaufnahmeimplantats 2 hinzunimmt. Dieser konische Abschnitt 24 befindet sich bei implantiertem Bohrschablonenimplantat 2 im Bereich des den Kieferknochen 1 umgebenden Zahnfleischs 25.

Der Kopf 9 weist einen regelmäßig ausgebildeten mehrflächigen Bereich zur Aufnahme eines Dentalwerkzeugs auf, beispielsweise ein Außen- oder Innen- Drei-, Vier- oder Sechs-Kant. In Fig. 4 ist ein Außen-Vier-Kant 26 dargestellt. Mittels dieses mehrflächigen Bereichs 26 wird das Bohrschablonenaufnahmeimplantat 2 unter Zuhilfenahme eines entsprechenden Werkzeugs in den Kieferknochen eingeschraubt, ggf. nach Vornahme einer ersten dünnen Bohrung.

Ferner ist im Bereich des Kopfes 9 ein sich axial in das Bohrschablonenaufnahmeimplantat 2 hinein erstreckendes Innengewinde 27 eingeschnitten. Dieses Innengewinde 27 dient zur Aufnahme einer Befestigungsschraube 28, mittels derer die Bohrschablone 4 bzw. eine Befestigungszunge 7 der Bohrschablone 4 gegen die obere Endfläche 29 des konischen Abschnitts 24 verschraubt wird.

Die Befestigungsschraube 28 weist ferner Mittel zur Aufnahme eines Dentalwerkzeugs auf, beispielsweise einen Schraubenschlitz, einen Kreuzschlitz, oder einen Innen- oder Außen- Drei-, Vier- oder Sechs-Kant 30.

Der Durchmesser des Bohrschablonenaufnahmeimplantats 2 beträgt im Bereich des Gewindes 23 etwa 1,5 bis 3 mm, insbesondere 1,8 bis 2,5 mm. Die Länge des Bohrschablonenaufnahmeimplantats beträgt etwa 5 bis 8 mm, wobei die im Knochen implantierte Länge des Implantats etwa 4 bis 7 mm beträgt. Bei den Bohrschablonenaufnahmeimplantaten 2 handelt es sich daher um - im Vergleich zu üblichen Dentalimplantaten - kleine und dünne Implantate. Dem konischen Anschnitt 24 kommt daher neben der Funktion des Abdichtens des Bohrschablonenaufnahmeimplantats 2 im Bereich des Zahnfleischs 25 eine weitere Bedeutung zu, nämlich den Durchmesser des an sich dünnen Bohrschablonenaufnahmeimplantats 2 aufzuweiten, so dass die Bohrung für das Innengewinde 27 mit ausreichendem Durchmesser gefertigt werden kann. Darüber hinaus vergrößert sich durch diese konische Ausbildung 24 des Bohrschablonenaufnahmeimplantats die obere Endfläche 29 zur Aufnahme einer Befestigungszunge 7. Eine größere obere Endfläche 29 ist vorteilhaft, da sie für eine sichere Fixierung der Bohrschablone mit verantwortlich ist.

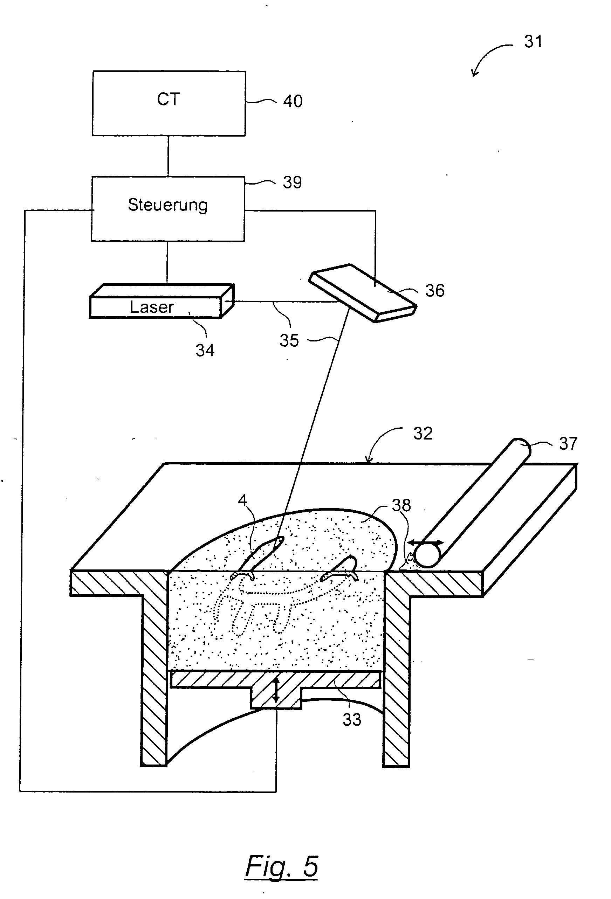

Fig. 5 zeigt eine Vorrichtung 31 zur Herstellung einer Bohrschablone 4 mittels Lasersintern oder Laserschmelzen. Die Vorrichtung 31 weist einen Tisch 32 mit einer höhenverstellbaren Plattform 33 auf, die über einen nicht dargestellten Antrieb in ihrer Höhe schrittweise, beispielsweise in Schritten von 0,05 bis 0,2 mm, verstellt werden kann.

Die Vorrichtung 31 weist ferner einen oberhalb des Tisches 32 angeordneten Laser 34, beispielsweise CO₂-Laser, auf, dessen Strahl 35 durch eine geeignete Vorrichtung, beispielsweise ein computergesteuertes Spiegelgalvanometer 36, geführt wird.

Die Vorrichtung 31 weist ferner einen Beschichtungsmechanismus 37 auf, mittels dessen pulverförmiges Material, insbesondere Titanpulver bzw. titanhaltiges Pulver oder Pulver einer Titanlegierung, gleichmäßig über die Oberfläche des Tisches 32 verteilt wird, so dass insbesondere der Raum zwischen der Oberfläche der Plattform 33 und der Oberfläche des Tisches 32 bis an die Oberfläche des Tisches 32 mit pulverförmigem Material 38 aufgefüllt wird.

Die Herstellung einer Bohrschablone 4 geschieht nunmehr wie folgt: Zunächst befindet sich die Plattform 33 in einer oberen Ausgangsstellung. Sodann wird der Laser 34 aktiviert und sein Laserstrahl 35 auf das pulverförmige Material gerichtet. Der Laserstrahl 35 verfestigt oder schmilzt aufgrund der von ihm erzeugten Hitze das pulverförmige Material, das - je nach Menge der auf das pulverförmige Material aufgebrachten Energie - mit umgebenden Pulver gesintert bzw. verschmolzen wird. Der Laserstrahl 35 fährt entsprechend einer vorprogrammierten Form der Bohrschablone 4 einen Bereich des pulverförmigen Materials 38 ab. Hierdurch entsteht eine Schicht verschmolzenen oder gesinterten Materials.

Sodann wird der Laser 34 deaktiviert und die Plattform 33 um einen Schichtdicke, beispielsweise von 0,05 bis 0,2 mm, abgesenkt. Mittels des Beschichtungsmechanismus 37 wird anschließend eine neue Schicht pulverförmigen Materials 38 aufgetragen und glattgestrichen. Anschließend wird erneut der Laser 34 aktiviert und der Laserstrahl 35 fährt wiederum computergesteuert den Bereich ab, innerhalb dessen das pulverförmige Material 38 mit der zuvor erzeugten Schicht verschmolzen oder aufgesintert werden soll, oder auch angrenzende oder nichtangrenzende Bereiche. Dieser Prozess des Auftragens von Schichten von pulverförmigem Material und der Aufsinterung bzw. Verschmelzung dieser Schichten mit den zuvor aufgebrachten Schichten mittels des Lasers 34 wird wiederholt durchgeführt, bis sich die Bohrschablone 4 in der gewünschten Form ausgebildet hat.

Mittels dieses Verfahrens lassen sich automatisch beliebige Formen von Bohrschablonen 4 ausbilden, die an beliebigen Stellen Befestigungszungen oder Löcher aufweisen. Dieses Verfahren eignet sich insbesondere deswegen, da komplexe Geometrien von Bohrschablonen ohne weiteres hergestellt werden können. Grundsätzlich kann mit dem Laserstrahl 35 beliebiges Materials gesintert bzw. verschmolzen werden, so dass die Erfindung nicht auf die Verwendung von Titanpulver bzw. titanhaltigem Pulver oder Pulver einer Titanlegierung beschränkt ist.

Die Vorrichtung 31 weist ferner eine Steuerung 39 auf, mittels derer insbesondere die Aktivierung und Deaktivierung des Lasers 34 sowie die Positionierung des Laserstrahls 35 über das Spiegelgalvanometer 36 und die Höhenverstellung der Plattform 33 gesteuert wird. Die Koordination dieser Komponenten der Vorrichtung 31 gewährleistet schließlich die korrekte Ausbildung der Bohrschablone 4. Die Steuerung erzeugt ihre Befehle in Abhängigkeit von vorab rechnerisch ermittelten Modelldaten einer virtuellen Bohrschablone. Diese Modelldaten sind zuvor ausgehend von den mittels eines Computertomographen 40 gewonnenen dreidimensionalen Daten eines Kiefers und/oder Gebisses ermittelt worden.

Während der mittels des Computertomographen 40 durchgeführten Computertomographie werden auch die Positionen der bereits im Kiefer implantierten Bohrschablonenaufnahmeimplantate ermittelt und entsprechend diesen Positionen an geeigneten Stellen an der Bohrschablone die Befestigungseinrichtungen, insbesondere Befestigungszungen 7, ausgebildet.

Dank der Erfindung können exakt hergestellte Bohrschablonen an exakt bestimmten Positionen im Kiefer starr fixiert werden, so dass auch eine starr fixierte Führung von Dentalimplantatbohrern sicher gewährleistet werden kann. Auf diese Weise kann die Genauigkeit der Position von Bohrungen für Dentalimplantaten sowie deren Ausrichtung exakt eingehalten werden.

## Patentansprüche

1. Anordnung zur Führung eines Dentalimplantatbohrers zum Herstellen einer Bohrung (11, 20-22) in einem Kiefer (1) zur Aufnahme eines Dentalimplantats, wobei die Anordnung eine an einem Kiefer (1), Gaumen und/oder einen oder mehrere Zähne angepasste Bohrschablone (4) mit einem oder mehreren Löchern (6) zur Durchführung des Bohrers umfasst,
**dadurch gekennzeichnet, dass**
- die Anordnung ferner wenigstens ein Bohrschablonenaufnahmeimplantat (2) zur Aufnahme der Bohrschablone (4) im Kiefer (1) umfasst und
- die Bohrschablone (4) wenigstens eine erste Befestigungseinrichtung (7, 8) und das Bohrschablonenaufnahmeimplantat (2) eine zweite Befestigungseinrichtung (28, 29) aufweist,
- wobei die erste Befestigungseinrichtung (7, 8) und die zweite Befestigungseinrichtung (28, 29) derart aneinander angepasst sind, dass die Bohrschablone (4) an dem Bohrschablonenaufnahmeimplantat (2) befestigbar ist.

2. Anordnung nach Anspruch 1,
**dadurch gekennzeichnet, dass**
die Anzahl der Bohrschablonenaufnahmeimplantate (2), die Anzahl der ersten Befestigungseinrichtungen (7, 8) und die Anzahl der zweiten Befestigungseinrichtungen (28, 29) jeweils wenigstens drei beträgt.

3. Anordnung nach Anspruch 2,
**dadurch gekennzeichnet, dass**
eine dritte der ersten Befestigungseinrichtungen (7, 8) außerhalb einer durch zwei andere erste Befestigungseinrichtungen (7, 8) verlaufende Gerade (10) angeordnet ist.

4. Anordnung nach Anspruch 2 oder 3,
**dadurch gekennzeichnet, dass**
ein drittes der Bohrschablonenaufnahmeimplantate (2) außerhalb einer durch zwei andere Bohrschablonenaufnahmeimplantate (2) verlaufenden Gerade (3) angeordnet ist.

5. Bohrschablone für eine Anordnung nach einem der Ansprüche 1 bis 4, wobei die Bohrschablone (4) ein oder mehrere Löcher (6) zur Durchführung eines Dentalimplantatbohrers zum Herstellen einer Bohrung (11, 20-22) in einem Kiefer (1) zur Aufnahme eines Dentalimplantats und wenigstens eine erste Befestigungseinrichtung (7, 8) aufweist, die derart ausgebildet ist, dass sie mit einer zweiten Befestigungseinrichtung (28, 29) eines Bohrschablonenaufnahmeimplantats (2) zur Aufnahme der Bohrschablone (4) im Kiefer (1) in Eingriff zur Befestigung der Bohrschablone (4) an dem Bohrschablonenaufnahmeimplantat (2) verbindbar ist.

6. Bohrschablone nach Anspruch 5,
**dadurch gekennzeichnet, dass**
die Bohrschablone (4) im wesentlichen aus Titan gebildet ist.

7. Bohrschablone nach Anspruch 5 oder 6,
**dadurch gekennzeichnet, dass**
die Bohrschablone (4) durch Lasersintern oder Laserschmelzen hergestellt ist.

8. Bohrschablone nach Anspruch 7,
**dadurch gekennzeichnet, dass**
beim Lasersintern oder Laserschmelzen ein Laserstrahl (35) anhand von Daten eines mittels Computertomographie (40) gewonnenen Bohrschablonenmodells geführt wird.

9. Bohrschablone nach einem der Ansprüche 5 bis 8,
**dadurch gekennzeichnet, dass**
die erste Befestigungseinrichtung (7, 8) von einem das Loch (6) bzw. die Löcher (6) zur Durchführung des Dentalimplantatbohrers aufweisenden Hauptkörpers (5) ausgehende Befestigungszungen (7) aufweist.

10. Bohrschablone nach Anspruch 9,
**dadurch gekennzeichnet, dass**
die Befestigungszunge (7) ein durchgehendes Loch (8) zur Aufnahme eines Kopfes (9) des Bohrschablonenaufnahmeimplantats (2) aufweist.

11. Bohrschablone nach einem der Ansprüche 5 bis 10,
**dadurch gekennzeichnet, dass**
die Bohrschablone (4) im Bereich des wenigstens einen Loches (6) zur Durchführung des Dentalimplantatbohrers einen Anschlag für den Dentalimplantatbohrer aufweist.

12. Bohrschablone nach einem der Ansprüche 5 bis 11,
**dadurch gekennzeichnet, dass**
das oder die Löcher (6) zur Durchführung eines Dentalimplantatbohrers eine oder mehrere entnehmbare Führungshülsen (12, 17) zur Bohrerführung aufweisen, wobei jede Führungshülse (12, 17) an einen vorbestimmten Bohrerdurchmesser angepasst ist.

13. Bohrschablone nach Anspruch 12,
**dadurch gekennzeichnet, dass**
mehrere Führungshülsen (12, 17) teleskopartig ineinandergesteckt und einzeln entnehmbar sind.

14. Bohrschablonenaufnahmeimplantat für eine Anordnung nach einem der Ansprüche 1 bis 4, wobei das Bohrschablonenaufnahmeimplantat (2) zur Aufnahme einer Bohrschablone (4) nach einem der Ansprüche 5 bis 13 im Kiefer ausgebildet ist, die wenigstens eine erste Befestigungsvorrichtung (7, 8) aufweist, und wobei das Bohrschablonenaufnahmeimplantat (2) eine zweite Befestigungseinrichtung (28, 29) aufweist, die derart an die erste Befestigungseinrichtung (7, 8) angepasst ist, dass die Bohrschablone (4) an dem Bohrschablonenaufnahmeimplantat (2) befestigbar ist.

15. Bohrschablonenaufnahmeimplantat nach Anspruch 14,
**gekennzeichnet durch**
einen unteren, ein Außengewinde (23) zum Einschrauben des Bohrschablonenaufnahmeimplantats (2) in den Kiefer (1) aufweisenden Abschnitt und einen oberen, gewindefreien Abschnitt (24), der konisch mit zum Kopf (9) des Bohrschablonenaufnahmeimplantats (2) zunehmenden Durchmesser ausgebildet ist.

16. Bohrschablonenaufnahmeimplantat nach Anspruch 14 oder 15,
**dadurch gekennzeichnet, dass**
die zweite Befestigungseinrichtung (28, 29) ein im Bereich des Kopfes (9) des Bohrschablonenaufnahmeimplantats (2) beginnendes, sich in das Bohrschablonenaufnahmeimplantat (2) hinein erstreckendes Innengewinde (27) aufweist.

17. Bohrschablonenaufnahmeimplantat nach einem der Ansprüche 14 bis 16,
**dadurch gekennzeichnet, dass**
im Bereich des Kopfes (9) des Bohrschablonenaufnahmeimplantats (2) ein regelmäßig ausgebildeter mehrflächiger Bereich (26) zur Aufnahme eines Dentalwerkzeugs vorgesehen ist.

18. Bohrschablonenaufnahmeimplantat nach Anspruch 17,
**dadurch gekennzeichnet, dass**
der mehrflächige Bereich (26) ein Außen- oder Innendreikant, -vierkant oder -sechskant ist.

19. Bohrschablonenaufnahmeimplantat nach einem der Ansprüche 16 bis 18,
**dadurch gekennzeichnet, dass**
die zweite Befestigungseinrichtung (28, 29) eine in das Innengewinde (27) einschraubbare Befestigungsschraube (28) zur Befestigung der Bohrschablone (4) am Bohrschablonenaufnahmeimplantat (2) aufweist.

20. Verfahren zur Herstellung einer Bohrschablone gemäß einem der Ansprüche 5 bis 13,
**dadurch gekennzeichnet, dass**
die Bohrschablone (4) durch schichtweises Lasersintern oder Laserschmelzen von in Pulverform vorliegendem Material (38) ausgebildet wird.

21. Verfahren nach Anspruch 20,
**dadurch gekennzeichnet, dass**
ein Laserstrahl (35) die Fläche einer zur sinternden bzw. zu schmelzenden Schicht abfährt.

22. Verfahren nach Anspruch 21,
**dadurch gekennzeichnet, dass**
der Laserstrahl (35) von einer Steuereinheit (39) in Abhängigkeit von vorab rechnerisch ermittelten Modelldaten einer virtuellen Bohrschablone geführt wird.

23. Verfahren nach Anspruch 22,
**dadurch gekennzeichnet, dass**
die Modelldaten der virtuellen Bohrschablone ausgehend von mittels Computertomographie (40) eines Kiefers gewonnenen Daten ermittelt werden.

24. Verfahren nach Anspruch 22 oder 23,
**dadurch gekennzeichnet, dass**
Positionen von im Kiefer implantierten Bohrschablonenaufnahmeimplantaten (2) ermittelt werden und an diesen Positionen entsprechenden Positionen an der Bohrschablone (4) die ersten Befestigungseinrichtungen (7, 8) ausgebildet werden.
